# EUROPÄISCHE PATENTSCHRIFT

(11) **EP 1 712 393 B1**
(45) Veröffentlichungstag und Bekanntmachung des Hinweises auf die Patenterteilung: **18.09.2013**
(21) Anmeldenummer: 06006280.9
(22) Anmeldetag: 27.03.2006
(51) Int. Cl.: B60J 11/00

(54) **Schutzhaube, insbesondere für Kraftfahrzeuge**
Protective cover, in particular for motor vehicles
Carter de protection, en particulier pour véhicule automobile

(30) Priorität: 11.04.2005 DE 202005005785 U
(43) Veröffentlichungstag der Anmeldung: 18.10.2006
(73) Patentinhaber: Volkswagen Aktiengesellschaft, 38440 Wolfsburg (DE); Aydar, Nalan, 71106 Magstadt (DE)
(72) Erfinder: Aydar, Nalan, 71106 Magstadt (DE)
(74) Vertreter: von Biedersee, Heidereich

(56) Entgegenhaltungen:
- WO-A-2004/091954
- DE-U1- 20 306 825
- DE-U1- 20 319 938
- DE-U1-202004 014 337
- US-A- 5 725 933

## Beschreibung

Die Erfindung betrifft eine Schutzhaube, insbesondere für Kraftfahrzeuge, die aus einem Flächenmaterial gebildet ist und die einer äußeren Gesamtform oder der Form einzelner Teile eines zu schützenden Objektes angepasst ist und zumindest deren Ränder am zu schützenden Objekt gehalten sind, wobei entlang zumindest eines Randes der Schutzhaube, welcher einer Körperkante des zu schützenden Objektes zugeordnet ist, ein Halteelement vorgesehen ist, das in einer Halteposition unter Vorspannung an der Körperkante des zu schützenden Objektes angreift, wobei das Halteelement unmittelbar mit der Schutzhaube verbunden ist.

Derartige Schutzhauben sind besonders zum präventivem Schutz sowohl der Oberfläche gegen abrasive oder chemische Emission, wie Staub, Flugrost, Vogelkot, Kondensations- und Staunässe und eindringende Nässe als auch gegen mechanische Beschädigungen, wie beispielsweise Kratz- und Schleifschäden und daraus resultierende Schäden bei Stand-, Lagerund Transportzeiten vorgesehen.

Aus der gattungsgemäßen DE 203 06 825 U1 ist eine Schutzhaube für Kraftfahrzeuge bekannt, bei welcher im Bereich von Körperkanten der zu schützenden Kraftfahrzeuge an der Schutzhaube eine Tasche angenäht ist, in der ein flach streifenförmiges Element eingefügt werden kann, das in einer Halteposition unter Vorspannung an der Körperkante des zu schützenden Objektes angreift. Damit wird die Schutzhaube zwar gespannt und ein Eindringen von Luft im Bereich der Körperkanten, beispielsweise der Radläufe vermieden, jedoch ist das Nähen der Taschen und das Einbringen der Formteile in die Tasche ein zusätzlicher Arbeitsschritt.

Des Weiteren ist in der DE 203 19 938 U1 eine Schutzhaube beispielsweise für Kraftfahrzeuge beschrieben, bei der das Halteelement aus dem Material oder aus dem Grundmaterial der Schutzhaube gebildet ist und mit der Schutzhaube durch annähen oder verschweißen verbunden ist. Speziell ist angegeben, dass das Halteelement aus mehreren, miteinander verbundenen Schichten eines Polyestervlieses gebildet ist. Zur Herstellung solcher Halteelemente bzw. von Schutzhauben mit solchen Haltelementen sind mehrere Arbeitsschritte notwendig. Das Polyestervlies wird in einem ersten Schritt in Form verpresst, danach geschnitten bzw. gestanzt und gegebenenfalls die Einzelteile zusammengenäht oder per Ultraschall verschweißt. In einem letzten Schritt wird das so gefertigte Halteelement mit der Schutzhaube verbunden.

Ferner zeigt die WO 2004/091954 A1 eine Schutzhaube fuer Kraftfahrzeuge, Kraftfahrzeugteile oder dergleichen, die der äußeren Gesamtform oder der Form einzelner Teile eines zu schützenden Objektes angepasst ist und deren Ränder am zu schützenden Objekt gehalten sind, wobei ein Einstiegsschutz vorgesehen ist, der eine den Seitenschweller zumindest teilweise abdeckende Einstiegsschutzlasche aufweist, welche am freien, zum Innenraum weisenden Ende zumindest ein Halteelement aufweist, das an einer im Seitenschweller angeordneten Schutzleiste angreift.

Des Weiteren ist aus der DE 20 2004 014 337 U1 eine Schutzhaube bekannt, deren Ränder am zu schützenden Objekt gehalten sind, wobei entlang eines Randes der Schutzhaube, ein Halteelement vorgesehen ist, das in seiner Halteposition unter Vorspannung an der Koerperkante des zu schützenden Objektes angreift, wobei zumindest ein weiteres Halteelement der Körperkante zugeordnet ist und die Halteelemente getrennt voneinander in eine Halteposition ueberführbar sind

Die Aufgabe der Erfindung ist es nun, eine Schutzhaube mit fest verbundenen Haltelementen zu schaffen, bei der die Herstellung des Haltelementes mit weniger Arbeitsschritten durchgeführt wird.

Die Aufgabe wird mit den Merkmalen des Schutzanspruchs 1 gelöst. Vorteilhafte Aus- und Weiterbildungen sind in den Unteransprüchen dargestellt.

Gemäß der Erfindung ist vorgesehen, die mit der Schutzhaube zu verbindenden Halteelemente aus einem thermoplastischen Material, vorzugsweise aus einem Polyolefin herzustellen. Nach einer vorteilhaften Ausbildung der Erfindung besteht das Material der Halteelemente aus einem abriebfest modifizierten Polyolefin mit einer Shorehärte im Bereich von 40 bis 70 D, vorzugsweise mit einer Shorehärte von 62 +/- 3D. Materialmöglichkeiten können insbesondere sein: Polypropylen, Polyethylen bzw. ein Polypropylen/Polyethylen Gemisch, wobei die Shorehärte sowie die Temperaturbeständigkeit entsprechend auf die Anwendung Halteelement abgestimmt wird.

Die Dichte des Materials liegt vorzugsweise im Bereich von 0,90 bis 1,0 g/cm³, insbesondere beträgt die Dichte 0,97g/cm³.

Nach einer Ausbildung des Materials liegt dessen Reißdehnung im Bereich von 400 bis 700%, insbesondere bei 538 +/-40%. Die Streckspannung des Materials liegt im Bereich von 18 bis 28 MPa, vorzugsweise bei 23 +/-2MPa.

Der Temperatureinsatzbereich des Materials sollte im Bereich von -60 °C bis +150 °C, zumindest im Bereich von -60 °C bis + 95°C liegen.

Das Halteelement weist verrundete Kanten auf, um eine mechanische Beschädigung der Fahrzeugoberflächen zu vermeiden. Ein solches Haltelement kann mittels CNC-Fräsverfahren hergestellt werden, bei dem vorzugsweise die Kanten bereits verrundet werden. Auch andere Stanz- oder Schneidverfahren, beispielsweise Wasserstrahl- oder Laserschneiden sind denkbar, wobei hier in einem nachfolgenden Schritt die Kanten verrundet werden müssen. Es ist jedoch auch denkbar die Halteelemente durch Spritzgießen oder Vakuumformung, beispielsweise Tiefziehen, herzustellen.

Das Halteelement weist nach einer vorteilhaften Ausbildung eine Dicke im Bereich von 0,5 bis 2,00 mm, vorzugsweise von 1,5 +/-0,3mm auf.

Gemäß der Erfindung ist das Halteelement an der Schutzhaube angenäht oder angeschweißt. Dabei ist vorteilhaft auszuführen, dass die Nahtbreite beim Nähen 5 bis 20 mm, vorzugsweise 8 bis 10 mm beträgt. Beim Anschweißen kommen vorzugsweise Ultraschallschweißverfahren zum Einsatz.

Die Körperkanten des Kraftfahrzeuges, an denen Halteelemente der Schutzhaube vorgesehen sind, können beispielsweise die Radläufe und/oder die Motorhaubenkante und/oder die Türkanten des Kraftfahrzeuges sein.

Das Halteelement weist vorzugsweise einen rechteckigen oder dreieckigen Querschnitt auf und ist biegeelastisch ausgebildet.

Gemäß der Erfindung ist das Halteelement einteilig ausgebildet. Gegenüber mehrteiligen Ausführungen von Halteelementen, wie sie beispielsweise aus der DE 203 19 938 U1 bekannt sind, hat die einteilige Form den Vorteil, dass die bei den mehrteiligen Halteelementen auftretenden Verbindungsschwulste, die die Formteile labil werden lassen oder so genannte Bruchstellen aufzeigen, vermieden werden und somit eine leichtgängige Klappfunktion gewährleistet wird.

Eine Ausbildung des Halteelementes sieht vor, dass das Halteelement in seiner Breite größer ist als eine Umkantung der Körperkante, beispielsweise der Radläufe oder der Motorhaubenkante, ist. Diese Ausbildung ermöglicht ein sicheres Positionieren der Schutzhaube und verhindert ein selbständiges Lösen durch hinterströmende Luft.

Weiterhin kann vorgesehen sein, dass das Halteelement einen Krümmungsradius aufweist, der größer als der Radius oder der Krümmungsverlauf der Körperkante des Fahrzeuges oder eines Fahrzeugteils, wodurch ein Klappeffekt zur Fixierung des Halteelementes an der Körperkante erzielt wird.

Vorteilhafterweise ist vorgesehen, dass bei einer Erhöhung der Haltekraft durch die Vorspannung des flach streifenförmigen Halteelementes die Differenz zwischen dem Krümmungsradius und des Krümmungsverlaufes der Körperkante erhöht wird. Dadurch kann erzielt werden, dass selbst bei höheren Fahrtgeschwindigkeiten während des Transportes, wie beispielsweise auf einem Zug oder während der Fahrt des Kraftfahrzeuges eine sichere Anlage der Schutzhaube, zumindest im Abschnitt der Befestigung, gegeben ist.

Das Material der Schutzhaube ist derart ausgebildet, dass es von außen nach innen zum schützenden Objekt wasser- und staubundurchlässig ist. Um eine Kondensatbildung auf der Oberfläche des zu schützenden Objektes zu verhindern, sollte es jedoch zumindest von innen nach außen luft- und wasserdampfdurchlässig sein. Vorzugsweise ist als Grundmaterial der Schutzhaube wenigstens eine Lage Vliesstoff aus synthetischen und/oder natürlichen und/oder halbsynthetischen Stapelfasern vorgesehen. Vorzugsweise ist außenseitig auf dem Grundmaterial eine Polymerbeschichtung vorgesehen oder es ist eine Folie aus Polymerstoffen auflaminiert.

Nachfolgend wird die Erfindung anhand von Ausführungsbeispielen näher beschrieben. Die zugehörigen Zeichnungen zeigen:
- Fig. 1: eine perspektivische Ansicht eines Kraftfahrzeuges mit einer Schutzhaube,
- Fig. 2: die Anordnung eines Halteelementes an einem Radlauf eines Kraftfahrzeuges,
- Fig. 2a: ein für einen Radlauf vorgesehenes Halteelement,
- Fig. 3: eine Anordnung eines Halteelementes an einem Radlauf vor der Festlegung an der Körperkante,
- Fig. 4: eine Anordnung eines Halteelementes an einem Radlauf nach der Festlegung und
- Fig. 5: ein Haltelement zur Festlegung der Schutzhaube an einer Körperkante einer Motorhaube eines Kraftfahrzeuges

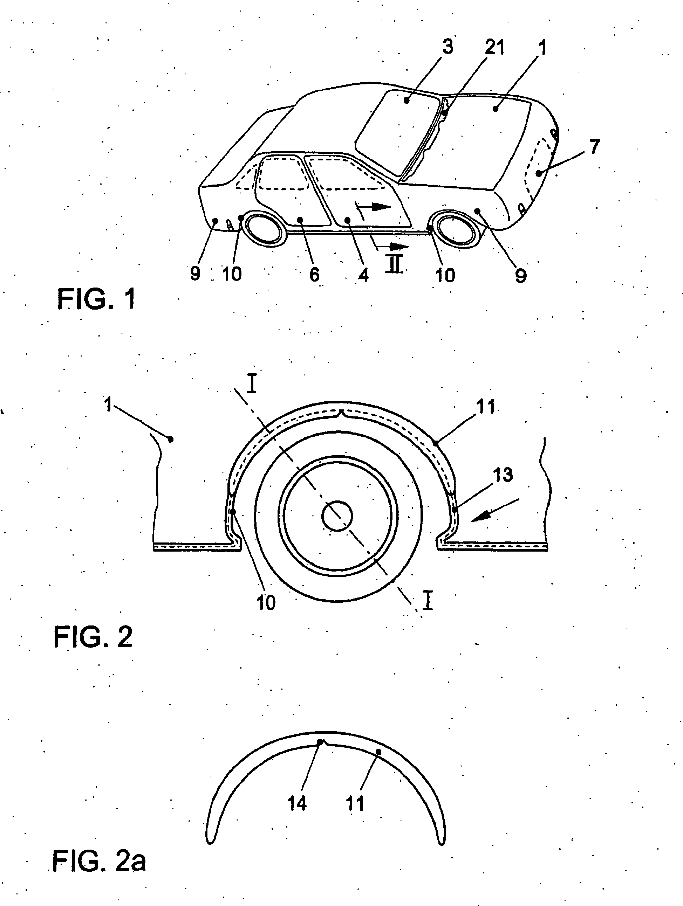

Fig. 1 zeigt eine Schutzhaube 1, die auf ein Kraftfahrzeug aufgezogen ist. Diese Schutzhaube ist beispielsweise einteilig ausgebildet und weist je nach Kundenwunsch unterschiedliche Beschnittbereiche 3,4,6,7 auf.

Die Schutzhaube 1 ist gemäß dem Ausführungsbeispiel aus einer oder mehreren Lagen Vliesstoff aus synthetischen Stapelfasern hergestellt, der an seiner vom Kraftfahrzeug abgewandten Seite eine Polymerbeschichtung aufweist. Als Polymere kommen in Betracht Polypropylen, Polyäthylen, Polyethersulfone (PES), Polyamide, aber auch andere Polymere sind denkbar. Die Verfestigung des Vliesstoffes erfolgt durch Nadeln, Wasserstrahltechnik oder thermisch bzw. Kombinationen hieraus.

Die Schutzhaube 1 umfasst weiterhin vordere und hintere Radlaufabdeckungen 9, die an die Form des Kotflügels und den Verlauf der Körperkante 10 des Radlaufs angepasst sind. An den Körperkanten 10 erfolgt eine Fixierung, wie im Folgenden beschrieben.

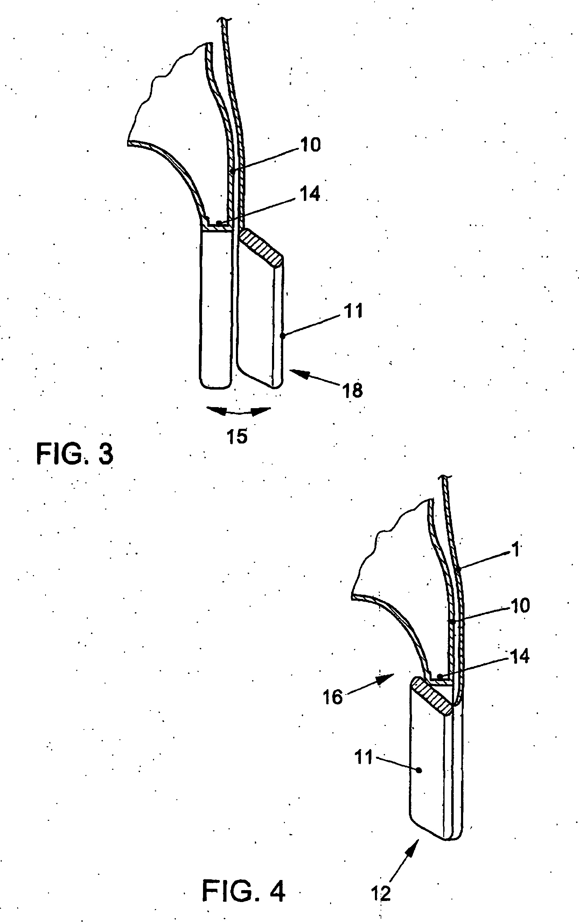

Durch die Anpassung der Radlaufabdeckung sind die Räder des Kraftfahrzeuges frei zugänglich. Als Fixierung der Radiaufabdeckungen 9 am Radlauf sind Haltelemente 11 vorgesehen, wie in Fig.2 bis 4 dargestellt. Das Halteelement 11 ist ein vorzugsweise flaches streifenförmiges Teil, das eine gekrümmte Form aufweist. Diese gekrümmte Form oder ein sichelähnlicher Verlauf des Halteelementes 11 geht beispielsweise aus Fig. 2 hervor. Während die Wandstärke wenige Millimeter, beispielsweise 1,5 mm, umfasst, beträgt die Breite üblicherweise 2 bis 15 cm, insbesondere 5 bis 10 cm, angepasst an die Größe des Fahrzeug-Radlaufes bzw. entsprechend der Fahrzeuggröße, so dass das Haltelement 11 um die Körperkante 10 so herumgelegt werden kann, dass es in einer Halteposition 12 (Fig.4) unter Vorspannung an der Körperkante 10 des zu schützenden Objektes angreift.

Das Haltelement 11 gemäß der Erfindung besteht aus einem abreibfest modifizierten Polyolefin und ist an der Schutzhaube angenäht oder angeschweißt. Es wird einteilig hergestellt, wobei unterschiedliche Herstellungsverfahren, wie Fräsen, Spritzgussverfahren, Stanzen oder Schneiden mit gegebenenfalls anschließenden Entgraten oder Verrunden der Kanten, zur Anwendung kommen können.

Das Material des Haltelementes weist vorzugsweise eine Shorehärte von ca. 62 D, eine Dichte von ca. 0,97 g/cm³, eine Reißdehnung von 538 % und eine Streckspannung von 23 MPa auf. Der Temperatureinsatzbereich liegt bei zumindest -60 °C bis + 95 °C.

Die Länge des Halteelementes 11 ist an den jeweiligen Radlauf des zu schützenden Kraftfahrzeuges angepasst. Die Verbindung mit der Schutzhaube 1 erfolgt über die Naht 13, deren Breite 5 bis 20 mm, vorzugsweise 8 bis 10 mm beträgt.

Das Halteelement 11 ist in seiner Breite größer als eine Umkantung 14 der Körperkante 10. Beim Befestigen des Halteelementes 11 an der Schutzhaube 1 kann zudem der Krümmungsradius des Haltelementes 11 auf den Krümmungsradius der Körperkante 10 über die Einkerbung 14 (Fig. 2a) des Halteelementes 11 angepasst werden.

In den Fig. 3, 4 ist ein Schnitt entlang der Linie I - I dargestellt. Nach dem Aufziehen der Schutzhaube 1 auf das Kraftfahrzeug ist das Halteelement 11 in der in der Fig. 3 dargestellten Ausgangsposition angeordnet. Zur Fixierung der Radlaufabdeckung 9 (Fig.1) an der Körperkante 10 wird das Halteelement 11 gemäß Pfeil 15 nach innen geklappt, so dass das freie Ende des Halteelementes 11 zum Radkasten zeigt. Damit liegt das Halteelement 11 unter Vorspannung mit einer Kraft gemäß Pfeil 16 an der Umkantung 14 des Radlaufes an. Das Abnehmen der Schutzhaube 1 erfordert - abgesehen von eventuell weiteren Spannelementen - lediglich ein Zurückklappen des Halteelementes 11 aus seiner Halteposition 12 in die Ausgangsposition 18.

Wie bereits aus der DE 203 06 825 U1 vorbekannt, wird auf Grund der Positionierung des Halteelementes 11 mit einem geringeren Radius über die Einkerbung 14 als dessen Ausgangszustand ein Klappeffekt erzielt, der neben der Fixierung auch eine Zentrierung und eine ständige Anpassung der Halterung an den Radlauf ermöglicht. Dadurch wird die Schutzhaube 1 ebenfalls stärker angespannt und ein zusätzliches Aufblähen der Schutzhaube weitestgehend unterbunden.

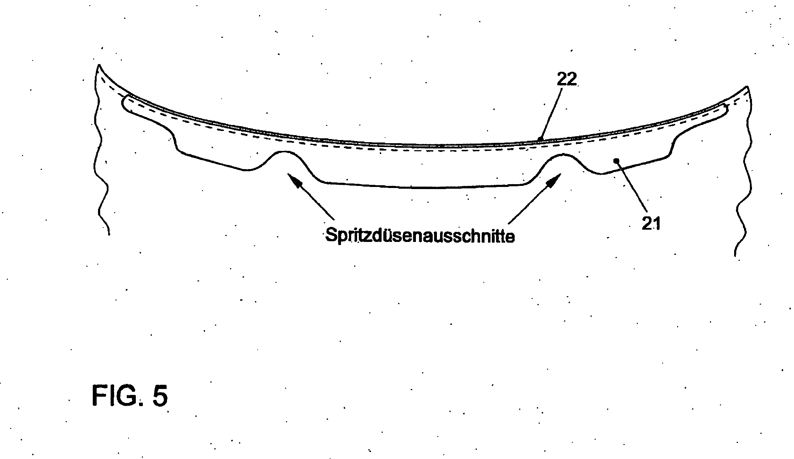

Gemäß Fig. 1 kann die Schutzhaube 1 einen Beschnittbereich 3 aufweisen, damit bei Bewegung des Fahrzeugs die Sicht nach außen für den Fahrer gegeben ist. Um ein Abheben bzw. Flattern der Schutzhaube 1 in diesem Bereich zu verhindern und eine Dichtigkeit, insbesondere gegen Schmutz- und Wasser sowie eindringen von Fahrtwind, zwischen der Schutzhaube und des Fahrzeuges herzustellen, ist ein weiteres Halteelement 21 an der Kante 22 der Schutzhaube 1 angenäht oder geschweißt (Fig.5) Das Halteelement 21 besteht gemäß der Erfindung ebenfalls aus einem Polyolefin mit den bereits genannten Eigenschaften und wird unter die Motorhaube des Kraftfahrzeuges geschoben. Somit wird eine Abdichtung und Befestigung zwischen Schutzhaube 1 und Kraftfahrzeug erreicht. Gemäß dem Ausführungsbeispiel sind das Haltelement 21 und die Schutzhaube 1 so geformt, dass die Spritzdüsenbereiche des Fahrzeuges freigelegt sind, so dass die Funktion der Spritzdüsen auf dem Transportweg bzw. beim Fahren des Fahrzeuges mit montierter Schutzhaube 2 gegeben ist.

Weitere Einsatzmöglichkeiten der erfindungsgemäßen Halteelemente sind alle Bereiche der Schutzhaube, bei denen es beispielsweise durch so genannte Beschnittbereiche 4,6 zu Undichtigkeiten oder zum Aufblähen der Schutzhaube 1 kommen kann.

## Patentansprüche

1. Schutzhaube (1), insbesondere für Kraftfahrzeuge die aus wenigstens einer Lage Vliesstoff eines Flächenmaterials gebildet ist und die einer äußeren Gesamtform oder der Form einzelner Teile eines zu schützenden Objektes angepasst ist und zumindest deren Ränder am zu schützenden Objekt gehalten sind, wobei entlang zumindest eines Randes der Schutzhaube (1), welcher einer Körperkante (10, 22) des zu schützenden Objektes zugeordnet ist, ein mit der Schutzhaube (1) verbundenes Halteelement (11, 21) vorgesehen ist, wobei das mit der Schutzhaube (1) verbundene Halteelement (11, 21) nach Einnahme einer Ausgangsposition (18) in einer Halteposition (17) der Schutzhaube (1) unter Vorspannung an der Körperkante (10, 21) eines zu schützenden Objektes angreift, wobei das aus einem thermoplastischen Material bestehende Halteelement (11, 21) einteilig ist, und in der Ausgangsposition (18) an die Körperkante (10, 22) angepasst ist, wodurch dem einteiligen Halteelement (11, 21) zur Befestigung der Schutzhaube(1) gegenüber der Körperkante (10, 22) ein Klappeffekt ermöglicht wird, bei dem das Halteelement (11, 21) in der Halteposition (12) der Schutzhaube (1) mit seinem freien Ende unter Vorspannung um die Körperkante (10, 22) klappt und zur Erreichung der Ausgangsposition (18) wieder zurückklappt, **dadurch gekennzeichnet, dass** das Halteelement (11, 21) unmittelbar an dem Rand der Schutzhaube (1) angenäht oder angeschweißt ist, wobei das Halteelement (11, 21) ein flaches Teil ist, welches verrundete Kanten aufweist.

2. Schutzhaube nach Anspruch 1, **dadurch gekennzeichnet, dass** das Halteelement (11, 21) eine Dicke von 0,5 bis 2,00 mm, vorzugsweise von 1,5 mm aufweist.

3. Schutzhaube nach Anspruch 1, **dadurch gekennzeichnet, dass** die Nahtbreite 5 bis 20 mm eines angenähten Halteelementes (11, 21), vorzugsweise 8-10 mm beträgt.

4. Schutzhaube nach Anspruch 1, **dadurch gekennzeichnet, dass** das Halteelement (11, 21) an die Schutzhaube (1), vorzugsweise mittels Ultraschallschweißverfahren, angeschweißt ist.

5. Schutzhaube nach einem der Ansprüche 1 bis 4, **dadurch gekennzeichnet, dass** das Halteelement (11, 21) durch Fräsen oder Spritzgussverfahren hergestellt ist.

6. Schutzhaube nach einem der Ansprüche 1 bis 4, **dadurch gekennzeichnet, dass** das Halteelement (11,21) durch Stanzen oder Schneiden, vorzugsweise Wasserstrahlschneiden oder Laserschneiden, und gegebenenfalls anschließenden Kantenbrechen oder Entgraten hergestellt ist.

7. Schutzhaube nach einem der Ansprüche 1 bis 6, **dadurch gekennzeichnet, dass** die Körperkante (10,22) des zu schützenden Objektes ein Radlauf und/oder eine Motorhaubenkante und/oder eine Türkante eines Kraftfahrzeuges ist.

8. Schutzhaube nach einem der Ansprüche 1 bis 7, **dadurch gekennzeichnet, dass** das Halteelement (11, 21) in seiner Breite größer als eine Umkantung der Körperkante (10, 22) ist.

9. Schutzhaube nach einem der Ansprüche 1 bis 8, **dadurch gekennzeichnet, dass** das Haltelement (11) einen Krümmungsradius aufweist, der größer als der Radius oder Krümmungsverlauf der Körperkante (10) ist.

10. Schutzhaube nach einem der Ansprüche 1 bis 9, **dadurch gekennzeichnet, dass** bei einer Erhöhung der Haltekraft des Halteelementes (11) an der Körperkante (10) die Differenz zwischen dem Krümmungsradius des Halteelementes (11) und des Krümmungsverlaufes der Körperkante (10) erhöht ist.

11. Schutzhaube nach einem der Ansprüche 1 bis 10, **dadurch gekennzeichnet, dass** das Halteelement (11, 21) biegeelastische Eigenschaften aufweist.

12. Schutzhaube nach einem der Ansprüche 1 bis 11, **dadurch gekennzeichnet, dass** das Material der Schutzhaube (1) luft-, wasserdampfdurchlässig sowie wasserabweisend und staubundurchlässig ist.

13. Schutzhaube nach Anspruch 12, **dadurch gekennzeichnet, dass** das Material der Schutzhaube (1) der wenigstens einen Lage Vliesstoff aus synthetischen und/oder natürlichen und/oder halbsynthetischen Stapelfasern gebildet ist.

14. Schutzhaube nach Anspruch 13, **dadurch gekennzeichnet, dass** die Schutzhaube (1) außenseitig eine Polymerbeschichtung aufweist oder mit einer Folie aus Polymerstoffen laminiert ist.

15. Schutzhaube nach einem der Ansprüche 1 bis 14, **dadurch gekennzeichnet, dass** das thermoplastische Material des Haltelementes (11, 21) ein abriebfest modifiziertes Polyolefin mit einer Shorehärte im Bereich von 40 bis 70 D, vorzugsweise mit einer Shorehärte von 62 D, ist.

16. Schutzhaube nach einem der Ansprüche 1 bis 15, **dadurch gekennzeichnet, dass** das Material des Halteelementes (11,21) eine Dichte im Bereich von 0, 90 bis 1,0 g/cm³, vorzugsweise 0,97 g/cm³, aufweist.

17. Schutzhaube nach einem der Ansprüche 1 bis 16, **dadurch gekennzeichnet, dass** das Material des Halteelementes (11, 21) eine Reißdehnung im Bereich von 400 bis 700 %, insbesondere von 538 %, aufweist.

18. Schutzhaube nach einem der Ansprüche 1 bis 17, **dadurch gekennzeichnet, dass** das Material des Halteelementes (11,21) eine Streckspannung im Bereich von 18 bis 28 MPa, vorzugsweise von 23 MPa, aufweist.

19. Schutzhaube nach einem der Ansprüche 1 bis 18, **dadurch gekennzeichnet, dass** das Material des Haltelementes (11,21) einen Temperatureinsatzbereich von -60 bis +150 °C, zumindest von -60 bis +95 °C hat.

## Claims

1. Protective cover (1), in particular for motor vehicles, said protective cover being formed from at least one layer of nonwoven sheet material and being adapted to an overall exterior shape or to the shape of individual parts of an object to be protected and at least the edges of said protective cover being held on the object to be protected, wherein, along at least one edge, which is assigned to a body edge (10, 22) of the object be protected, of the protective cover (1), there is provided a retention element (11, 21) which is connected to the protective cover (1), wherein, after assuming an initial position (18), the retention element (11, 21) which is connected to the protective cover (1) engages with preload on the body edge (10, 22) of an object to be protected in a retention position (17) of the protective cover (1), wherein the retention element (11, 21), which is composed of a thermoplastic material, is in one piece and is adapted to the body edge (10, 22) in the initial position (18), whereby, for the one-piece retention element (11, 21) for the fastening of the protective cover (1) with respect to the body edge (10, 22), a folding effect is made possible in which the retention element (11, 21) folds with its free end under preload about the body edge (10, 22) in the retention position (12) of the protective cover (1) and folds back again to attain the initial position (18), **characterized in that** the retention element (11, 21) is sewn or welded directly to the edge of the protective cover (1), wherein the retention element (11, 21) is a flat part which has rounded edges.

2. Protective cover according to Claim 1, **characterized in that** the retention element (11, 21) has a thickness of 0.5 to 2.00 mm, preferably of 1.5 mm.

3. Protective cover according to Claim 1, **characterized in that** the seam width accounts for 5 to 20 mm of a sewn-on retention element (11, 21), preferably 8-10 mm.

4. Protective cover according to Claim 1, **characterized in that** the retention element (11, 21) is welded to the protective cover (1), preferably by means of ultrasound welding methods.

5. Protective cover according to one of Claims 1 to 4, **characterized in that** the retention element (11, 21) is produced by milling or injection moulding methods.

6. Protective cover according to one of Claims 1 to 4, **characterized in that** the retention element (11, 21) is produced by punching or cutting, preferably water-jet cutting or laser cutting, and subsequent edge breaking or deburring if appropriate.

7. Protective cover according to one of Claims 1 to 6, **characterized in that** the body edge (10, 22) of the object to be protected is a wheel arch and/or a bonnet edge and/or a door edge of a motor vehicle.

8. Protective cover according to one of Claims 1 to 7, **characterized in that** the retention element (11, 21) is larger in terms of its width than a turned-over edging of the body edge (10, 22).

9. Protective cover according to one of Claims 1 to 8, **characterized in that** the retention element (11) has a radius of curvature greater than the radius or curvature profile of the body edge (10).

10. Protective cover according to one of Claims 1 to 9, **characterized in that**, in the event of an increase of the retention force of the retention element (11) on the body edge (10), the difference between the radius of curvature of the retention element (11) and that of the curvature profile of the body edge (10) is increased.

11. Protective cover according to one of Claims 1 to 10, **characterized in that** the retention element (11, 21) has resiliently elastic characteristics.

12. Protective cover according to one of Claims 1 to 11, **characterized in that** the material of the protective cover (1) is permeable to air and water vapour and is water-repellent and impermeable to dust.

13. Protective cover according to Claim 12, **characterized in that** the material of the protective cover (1) of the at least one layer of nonwoven is formed from synthetic and/or natural and/or semisynthetic staple fibres.

14. Protective cover according to Claim 13, **characterized in that**, on the outer side, the protective cover (1) has a polymer coating or is laminated with a film of polymer substances.

15. Protective cover according to one of Claims 1 to 14, **characterized in that** the thermoplastic material of the retention element (11, 21) is a polyolefin which is modified so as to exhibit wear resistance and which has a Shore hardness in the range from 40 to 70 D, preferably a Shore hardness of 62 D.

16. Protective cover according to one of Claims 1 to 15, **characterized in that** the material of the retention element (11, 21) has a density in the range from 0.90 to 1.0 g/cm³, preferably 0.97 g/cm³.

17. Protective cover according to one of Claims 1 to 16, **characterized in that** the material of the retention element (11, 21) has an elongation at tear in the range from 400 to 700%, in particular of 538%.

18. Protective cover according to one of Claims 1 to 17, **characterized in that** the material of the retention element (11, 21) has a yield stress in the range from 18 to 28 MPa, preferably of 23 MPa.

19. Protective cover according to one of Claims 1 to 18, **characterized in that** the material of the retention element (11, 21) has a service temperature range of -60 to +150°C, at least of - 60 to +95°C.

## Revendications

1. Carter de protection (1), en particulier pour véhicules automobiles, constitué d'au moins une couche de non-tissé d'un matériau de surface et adapté à une forme extérieure générale ou à la' forme de certaines parties d'un objet à protéger, et dont au moins les bords sont maintenus sur l'objet à protéger, dans lequel un élément de maintien (11, 21) relié au carter de protection (1) est prévu le long d'au moins un bord du carter de protection (1) qui est attribué à un bord du corps (10, 22) de l'objet à protéger, dans lequel l'élément de maintien (11, 21) relié au carter de protection (1) engage le bord du corps (10, 22) d'un objet à protéger, sous précontrainte, dans une position de maintien (17) du carter de protection (1), après avoir pris une position initiale (18), dans lequel' l'élément de maintien (11, 21) constitué d'une matière thermoplastique est formé d'une seule pièce et adapté au bord du corps (10, 22) dans la position initiale (18), ce qui permet à l'élément de maintien (11, 21) formé d'une seule pièce d'obtenir un effet de rabattement pour la fixation du carter de protection (1) par rapport au bord du corps (10, 22), où, dans la position de maintien (12) du carter de protection (1), l'élément de maintien (11, 21) se rabat autour du bord du corps (10, 22) avec son extrémité libre, sous précontrainte, puis revient pour atteindre la position initiale (18), **caractérisé en ce que** l'élément de maintien (11, 21) est accroché ou soudé directement au bord du carter de protection (1), l'élément de maintien (11, 21) étant une pièce plate comportant des bords arrondis.

2. Carter de protection selon la revendication 1, **caractérisé en ce que** l'élément de maintien (11, 21) présente une épaisseur de 0,5 à 2,0 mm, en particulier de 1,5 mm.

3. Carter de protection selon la revendication 1, **caractérisé en ce que** la largeur de soudure d'un élément de maintien (11, 21) soudé mesure entre 5 et 20 mm, de préférence entre 8 et 10 mm.

4. Carter de protection selon la revendication 1, **caractérisé en ce que** l'élément de maintien (11, 21) est soudé au carter de protection (1), de préférence au moyen d'un procédé de soudage par ultrasons.

5. Carter de protection selon l'une des revendications 1 à 4, **caractérisé en ce que** l'élément de maintien (11, 21) est réalisé par fraisage ou par un procédé de moulage par injection.

6. Carter de protection selon l'une des revendications 1 à 4, **caractérisé en ce que** l'élément de maintien (11, 21) est réalisé par estampage ou découpage, de préférence par découpage au jet d'eau ou par découpage laser, éventuellement suivi d'un ébavurage ou d'un biseautage.

7. Carter de protection selon l'une des revendications 1 à 6, **caractérisé en ce que** le bord du corps (10, 22) de l'objet à protéger est un arc d'aile et/ou un bord de capot et/ou un bord de portière d'un véhicule automobile.

8. Carter de protection selon l'une des revendications 1 à 7, **caractérisé en ce que** l'élément de maintien (11, 21) présente une largeur supérieure à un repli du bord du corps (10, 22).

9. Carter de protection selon l'une des revendications 1 à 8, **caractérisé en ce que** l'élément de maintien (11) présente un rayon de courbure supérieur au rayon ou à l'étendue de courbure du bord du corps (10).

10. Carter de protection selon l'une des revendications 1 à 9, **caractérisé en ce que** lors d'une augmentation de la force de maintien de l'élément de maintien (11) sur le bord du corps (10), la différence entre le rayon de courbure de l'élément de maintien (11) et l'étendue de courbure du bord du corps (10) augmente.

11. Carter de protection selon l'une des revendications 1 à 10, **caractérisé en ce que** l'élément de maintien (11, 21) présente des propriétés d'élasticité à la flexion.

12. Carter de protection selon l'une des revendications 1 à 11, **caractérisé en ce que** le matériau du carter de protection (1) laisse passer l'air, la vapeur d'eau, tout en étant imperméable à l'eau et à la poussière.

13. Carter de protection selon la revendication 12, **caractérisé en ce que** le matériau du carter de protection (1) de l'au moins une couche de non-tissé est constitué de fibres discontinues synthétiques et/ou naturelles et/ou semi-synthétiques.

14. Carter de protection selon la revendication 13, **caractérisé en ce que** du côté extérieur, le carter de protection (1) comporte un revêtement de polymère ou est laminé avec une feuille de matières polymères.

15. Carter de protection selon l'une des revendications 1 à 14, **caractérisé en ce que** la matière thermoplastique de l'élément de maintien (11, 21) est une polyoléfïne modifiée résistante à l'abrasion, avec une dureté Shore comprise entre 40 et 70 D, de préférence avec une dureté Shore de 62 D.

16. Carter de protection selon l'une des revendications 1 à 15, **caractérisé en ce que** le matériau de l'élément de maintien (11, 21) présente une densité comprise entre 0,90 et 1,0 g/cm³, de préférence de 0,97 g/cm³.

17. Carter de protection selon l'une des revendications 1 à 16, **caractérisé en ce que** le matériau de l'élément de maintien (11, 21) présente une élongation à la rupture comprise entre 400 et 700%, en particulier de 538%.

18. Carter de protection selon l'une des revendications 1 à 17, **caractérisé en ce que** le matériau de l'élément de maintien (11, 21) présente une tension à l'extension comprise entre 18 et 28 MPa, de préférence de 23 MPa.

19. Carter de protection selon l'une des revendications 1 à 18, **caractérisé en ce que** le matériau de l'élément de maintien (11, 21) présente une température d'utilisation comprise entre -60 et +150°C, au minimum entre -60 et +95°C.
